# EUROPÄISCHE PATENTSCHRIFT

(11) **EP 1 111 070 B1**
(45) Veröffentlichungstag und Bekanntmachung des Hinweises auf die Patenterteilung: **24.11.2004**
(21) Anmeldenummer: 00120804.0
(22) Anmeldetag: 23.09.2000
(51) Int. Cl.: C21B 9/12, F16K 49/00

(54) **Heisswindschieber**
Hot-blast slide valve
Vanne à vent chaud

(30) Priorität: 21.12.1999 DE 19961739
(43) Veröffentlichungstag der Anmeldung: 27.06.2001
(73) Patentinhaber: Z & J Technologies GmbH, 52355 Düren (DE)
(72) Erfinder: Becker, Karl, 52372 Kreuznau (DE); Heiden, Ralf, 52459 Inden-Schophoven (DE); Schawag, Wolfgang, 46537 Dinslaken (DE)
(74) Vertreter: KEIL & SCHAAFHAUSEN

(56) Entgegenhaltungen:
- DE-A- 2 850 640
- DE-A- 4 338 431
- DE-B- 1 031 329
- US-A- 2 121 686
- US-A- 4 161 959

## Beschreibung

Die Erfindung bezieht sich auf einen Heisswindschieber nach dem Oberbegriff des Anspruchs 1.

Heisswindschieber werden z. B. in Hochofenanlagen zur Anwendung gebracht. Ihre Aufgabe besteht dort darin, den Heisswind, welcher zur Energieversorgung des Hochofens benötigt wird, abzusperren bzw. freizugeben. Der Heisswindschieber ist in der Regel an dem Winderhitzer in die Heisswindleitung integriert, wo der Heisswind Temperaturen bis zu 1600°C aufweist. Ein Heisswindschieber besteht im Wesentlichen aus einem Gehäuse, einer Absperrplatte, einer Haube für die Aufnahme der Absperrplatte in Öffnungsstellung und einem Antriebssystem für die Absperrplatte. Bedingt durch die hohen Temperaturen werden die einzelnen Bauelemente mehr oder weniger gekühlt bzw. mehr oder weniger isoliert. Durch geschickten Aufbau von Isolierschichten in dem Heisswindschieber kann beispielsweise der Energieübergang aus dem Heisswind in das Kühlmedium bzw. nach außen in die Atmosphäre stark reduziert werden.

Aus der DE 197 47 903 A1 ist eine gekühlte Schieberplatte, insbesondere wassergekühlte Heisswindschieberplatte, bekannt, bei weicher der Plattenkörper mit einem spiralförmig verlaufenden Kühlmittelkanal ausgestattet ist. Dabei ist der Plattensitzring mit einem äußeren, sich über die Breite des Sitzringes erstreckenden flachen ringförmigen Kühlmittelkanal ausgestattet. Aufgrund der Flachheit des Kühlmittelkanals reicht dieser zur Kühlung u. U. nicht aus und unterliegt der Gefahr eines Verstopfens durch Ablagerungen.

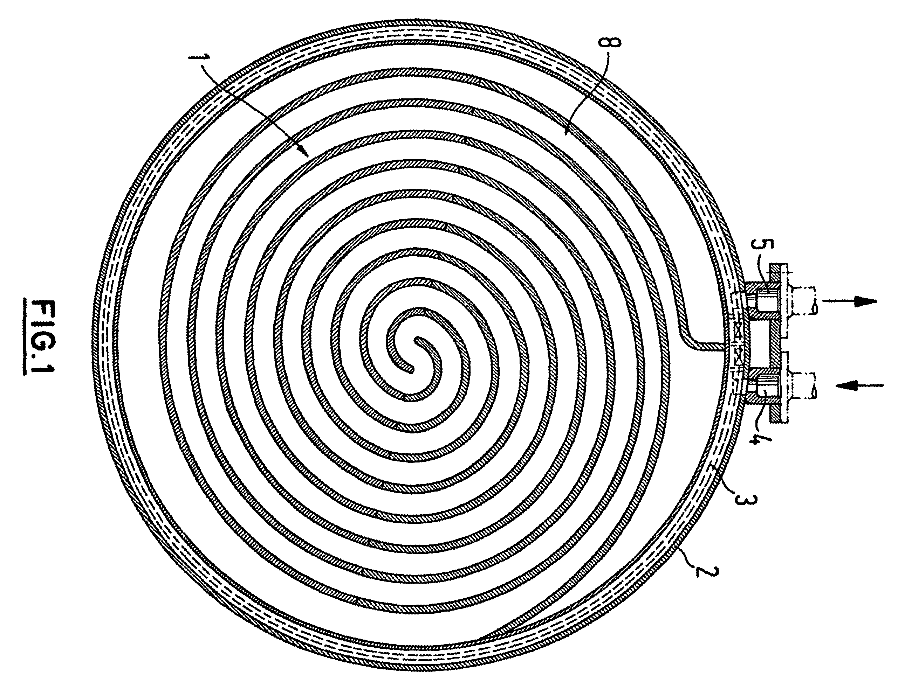

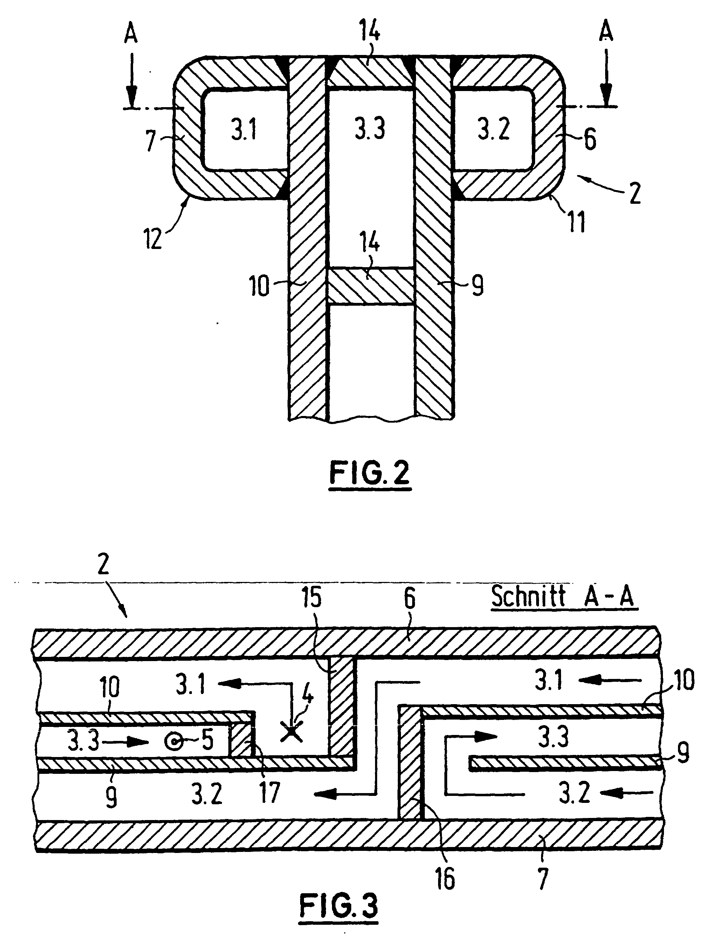

Aus der DE-U 1 952 440 ist der Sitzring einer Heisswindschieberplatte bei einer Ausführungsform (Fig. 1) von zwei parallelen Ringflanschen gebildet, welche eingeformte Kühlmittelkanäle aufweisen. Die Kühlmittelkanäle sind durch Ringkörper verschlossen, welche aufgeschweißt sind. Bei einer anderen Ausführungsform (Fig. 3) ist eine Stützplatte von einem im Querschnitt U-förmigen Sitzring umgeben, welcher durch einen radialen Teilungsring und einen Abschlussring in zwei geschlossene Ringkanäle unterteilt ist. In diese Ringkanäle wird Kühlmittel geleitet. Die Kühlmittelkanäle sollen sich beliebig parallel oder hintereinander schalten sowie so steuern und regulieren lassen, dass die notwendige Kühlmittelgeschwindigkeit gezielt der thermischen Belastung angepasst wird.

Aus H.N. Wilkinson et al., "Design of Hot-blast Valves with Suggested Improvements on the Paddle-type Valve", Steel Times, 4. August 1967, Seiten 131 ff. sind bei einer ersten Alternative (Fig. 4) in dem Sitzring einer Heisswindschieberplatte mehrere axial nebeneinander angeordnete sich im Schnitt radial schlitzförmig erstreckende umlaufende Kühlmittelkanäle vorgesehen, um die Kühlfläche und die Kühlmittelgeschwindigkeit zu erhöhen. Bei einer anderen Alternative (Fig. 5) sind zwei radial umeinander angeordnete umlaufende Kühlmittelkanäle vorzusehen.

Aufgabe der vorliegenden Erfindung ist es, bei einem Heisswindschieber der eingangs genannten Art bei einfachem Aufbau eine energiesparende Betriebsweise zu erzielen.

Diese Aufgabe wird erfindungsgemäß mit den Merkmalen des Anspruchs 1 gelöst.

Der Energiebedarf des Kühlmediums wird vorrangig durch die Menge des Kühlmediums bestimmt. Damit ist die Pumpenleistung eine direkte Funktion der Kühlwassermenge, welche durch die Kühlmittelkanäle des Heisswindschiebers geschickt wird. Um die Kühlwassermenge zu reduzieren, können die Kühlmittelkanäle im Querschnitt minimiert werden. Dies führt jedoch mindestens partiell zu unerwünscht hohen Temperaturüberschreitungen. Sofern die Kühlwassergeschwindigkeit stark reduziert wird, tritt ein ähnlicher Effekt auf. Daher sind bloße Maßnahmen einer Reduzierung der Kühlwassermenge für die Lebensdauer des Systems nicht förderlich. Mit der erfindungsgemäßen Lösung werden dagegen bei vorgegebenem Gesamtquerschnitt des Sitzringes des Gehäuses und/oder der Abspenplatte die Kühlmittelkanäle durch eine Art Mehrkammersystem verengt, dafür jedoch länger gestaltet und die Kühlwassermenge verringert. Dadurch und aufgrund der Anordnung der Kühlkanäle in dem jeweiligen Sitzring und zueinander erfolgt eine Energieeinsparung trotz wirksamer Kühlung.

Dabei kann die Strömungsrichtung des Kühlmittels z. B. in dem dritten Kühlmittelkanal gegenläufig zu der in dem ersten und/oder dem zweiten Kühlmittelkanal sein, um den Kühleffekt besonders günstig zu gestalten.

Auch kann die Strömungsrichtung des Kühlmittels in dem ersten Kühlmittelkanal gleich oder gegenläufig zu der in dem zweiten Kühlmittelkanal sein.

Eine besonders energiesparende Betriebsweise eines Heisswindschiebers im Sinne der Erfindung erhält man dann, wenn das Kühlmittel nach einem zentralen radialen Eintritt in den Gehäusesitzring und/oder den Plattensitzring in den ersten Kühlmittelkanal, nach Passieren des ersten Kühlmittelkanals in den zweiten Kühlmittelkanal und nach Passieren des zweiten Kühlmittelkanals in den dritten Kühlmittelkanal je um zweimal 90° sowie nach Passieren des dritten Kühlmittelkanals um einmal 90° in einen zentralen radialen Austritt umgelenkt wird.

Ferner ist es erfindungsgemäß möglich, dass Kühlmittel nach dem Durchströmen des Gehäusesitzringes und/oder des Plattensitzringes in einen vorzugsweise spiralförmig umlaufenden Kühlmittelkanal des Plattenkörpers zu führen.

Es ist femer für eine praktikable Betriebsweise des erfundenen Heisswindschiebers von Vorteil, wenn der Eintritt und der Austritt des Kühlmittels dicht beieinander am Gehäuse- bzw. Schieberplattenumfang liegen und z. B. nach oben in Verschieberichtung der Absperrplatte weisen.

Das Mehrkanalsystem in dem Plattensitzring ist z. B. dadurch auf einfache Weise verwirklichbar, dass der erste und der zweite Kühlmittelkanal auf ihrer Innenseite je von einer auch den Plattenkörper begrenzenden Plattenwand und daran anschließend je von einem nach innen offenen U-Profil begrenzt sind.

Der dritte Kühlmittelkanal kann dabei einfacherweise beidseits von den Plattenwänden begrenzt sein.

Die verschiedenen umlaufenden Kühlmittelkanäle der Absperrplatte werden insbesondere mit Hilfe der beiden äußeren Plattenwände des Plattenkörpers sowie darin in Abständen und parallel dazu angeordneten Zwischenwänden gebildet, welche für die Umlenkung des Kühlmittels an den entsprechenden Stellen mit senkrecht dazu stehenden Stegwänden überbrückt sind. Entsprechendes gilt für den Gehäusesitzring.

Einzelheiten der vorliegenden Erfindung ergeben sich aus der nachfolgenden Beschreibung von Ausführungsbeispielen anhand der Zeichnungen.

Es zeigen:
- Figur 1: eine die Erfindung aufweisende wassergekühlte Absperrplatte im Längsschnitt;
- Figur 2: einen Querschnitt durch die Absperrplatte gemäß Figur 1 im Bereich des Plattensitzringes, und
- Figur 3: einen Schnitt A-A durch den Sitzring gemäß Figur 2.

Die Absperrplatte für einen Heisswindschieber gemäß Figur 1 hat einen zentralen Plattenkörper 1 und einen diesen umgebenden Plattensitzring 2. Kühlmittel, insbesondere Wasser, wird über einen im Wesentlichen radial ausgerichteten Eintritt 4 in Kühlmittelkanäle 3 des Plattensitzringes 2 eingeführt, gelangt von dort in den spiralförmig verlaufenden Kühlmittelkanal 8 des Plattenkörpers 1 und von dort schließlich in einen unmittelbar neben dem Eintritt 4 angeordneten, ebenfalls im Wesentlichen radial ausgerichteten Austritt 5. Sowohl Eintritt 4 als auch Austritt 5 sind oben an dem Plattenumfang zur Verschieberichtung der Absperrplatte ausgerichtet angeordnet. Gemäß den Figuren 2 und 3 bestehen die Kühlmittelkanäle 3 des Plattensitzringes 2 aus mehreren hintereinander geschalteten Kühlmittelkanälen 3.1, 3.2 und 3.3. Diese sind so angeordnet und ausgebildet, dass das Kühlmittel von dem Eintritt 4 in den Plattensitzring 2 zunächst in einem an eine erste Sitzringseitenwand 6 angrenzenden ersten Kühlmittelkanal 3.1 um nahezu 360° in dem Plattensitzring 2 herumgeführt wird, dass das Kühlmittel dann in einem an eine gegenüber liegende zweite Sitzringseitenwand 7 angrenzenden zweiten Kühlmittelkanal 3.2 um nahezu 360° in dem Plattensitzring 2 herumgeführt wird, und dass das Kühlmittel anschließend in einem zwischen dem ersten und dem zweiten Kühlmittelkanal 3.1, 3.2 liegenden dritten Kühlmittelkanal 3.3 um nahezu 360° in dem Plattensitzring 2 bis zu dem Austritt 5 herum und aus dem Plattensitzring 2 heraus geführt wird. Die Strömungsrichtung ist in Figur 3 durch Pfeile angedeutet. In dem dargestellten Fall ist die Strömungsrichtung des Kühlmittels in dem dritten Kühlmittelkanal 3.3 gegenläufig zu der in dem ersten und dem zweiten Kühlmittelkanal 3.1, 3.2 herrschenden Strömungsrichtung. Die Strömungsrichtung des Kühlmittels in dem ersten Kühlmittelkanal 3.1 ist dabei gleichläufig zu der in dem zweiten Kühlmittelkanal 3.2. Auf diese Weise werden mit Hilfe einer Verkleinerung der Kühlmittelkanalquerschnitte bei gleichzeitiger Verlängerung des Kühlweges unter Verringerung der Kühlwassermenge auf etwa ein Drittel entsprechend geringere Energieverluste erreicht.

Wie aus Figur 3 ersichtlich, wird das Kühlmittel nach einem zentralen radialen Eintritt 4 in den Plattensitzring 2 in den ersten Kühlmittelkanal 3.1, nach Passieren des ersten Kühlmittelkanals 3.1 in den zweiten Kühlmittelkanal 3.2 und nach Passieren des zweiten Kühlmittelkanals 3.2 in den dritten Kühlmittelkanal 3.3 je um zweimal 90°, sowie nach Passieren des dritten Kühlmittelkanals 3.3 um einmal 90° in einen zentralen radialen Autritt 5 umgelenkt. Die Umlenkung erfolgt mit Hilfe von zwischen den beiden parallelen Sitzringseitenwänden 6, 7 vorgesehenen zwei, bis in den Sitzring 2 verlängerten Plattenwänden 9, 10, welche auch gemäß Figur 2 den zentralen Plattenkörper 1 begrenzen. Gemäß Figur 2 schließen sich an die Plattenwände 9, 10 zur Bildung der äußeren Kühlmittelkanäle 3.1, 3.2 zwei nach innen offene U-Profile 11, 12 an, während der mittlere Kühlmittelkanal 3.3 von einem inneren und einem äußeren Quersteg 13, 14 begrenzt ist. Weiter Querstege 15, 16, 17, welche aus Figur 3 erkennbar sind, dienen der Umlenkung in die und aus den verschiedenen Kühlmittelkanälen 3. So ist die erfindungsgemäße Absperrplatte auf konstruktiv einfache Weise herstellbar. Entsprechendes gilt für den Gehäusesitzring.
- 1: Plattenkörper
- 2: Plattensitzring
- 3: Kühlmittelkanäle
- 3.1: Kühlmittelkanal
- 3.2: Kühlmittelkanal
- 3.3: Kühlmittelkanal
- 4: Eintritt
- 5: Austritt
- 6: erste Sitzringseitenwand
- 7: zweite Sitzringseitenwand
- 8: spiralförmiger Kühlmittelkanal
- 9: Plattenwand
- 10: Plattenwand
- 11: U-Profil
- 12: U-Profil
- 13: innerer Quersteg
- 14: äußerer Quersteg
- 15: Quersteg
- 16: Quersteg
- 17: Quersteg

## Patentansprüche

1. Heißwindschieber mit einem Gehäuse, einer Absperrplatte, einer Haube für die Aufnahme der Absperrplatte in Öffnungsstellung und einem Antriebssystem für die Absperrplatte, wobei das Gehäuse einen kühlbaren Gehäusesitzring und die Absperrplatte einen zentralen Plattenkörper (1) und einen diesen umgebenden kühlbaren Plattensitzring (2) mit mehreren hintereinander geschalteten Kühlmittelkanälen (3) aufweisen, wobei das Kühlmittel von einem Eintritt (4) in dem Gehäusesitzring und/oder dem Plattensitzring (2) zunächst in einem an einer ersten Sitzringseitenwand (6) angrenzenden ersten Kühlmittelkanal (3.1) um nahezu 360° in dem Sitzring (2) und danach in einem an eine gegenüberliegende zweite Sitzringseitenwand (7) angrenzenden zweiten Kühlmittelkanal (3.2) um nahe zu 360° in dem Sitzring (2) herumführbar ist, **dadurch gekennzeichnet, dass** das Kühlmittel anschließend in einem zwischen dem ersten und dem zweiten Kühlmittelkanal (3.1, 3.2) liegenden dritten Kühlmittelkanal (3.3) um nahezu 360° in dem Sitzring (2) bis zu einem Austritt (5) herum- und aus dem Sitzring (2) herausführbar ist.

2. Heisswindschieber nach Anspruch 1, **dadurch gekennzeichnet, dass** die Strömungsrichtung des Kühlmittels in dem dritten Kühlmittelkanal (3.3) gegenläufig zu der in dem ersten und/oder dem zweiten Kühlmittelkanal (3.1, 3.2) ist.

3. Heisswindschieber nach Anspruch 1 oder 2, **dadurch gekennzeichnet, dass** die Strömungsrichtung des Kühlmittels in dem ersten Kühlmittelkanal (3.1) gleich oder gegenläufig zu der in dem zweiten Kühlmittelkanal (3.2) ist.

4. Heisswindschieber nach einem der vorhergehenden Ansprüche, **dadurch gekennzeichnet, dass** das Kühlmittel nach einem zentralen radialen Eintritt (4) in den Gehäusesitzring und/oder den Plattensitzring (2) in den ersten Kühlmittelkanal (3.1), nach Passieren des ersten Kühlmittelkanals (3.1) in den zweiten Kühlmittelkanal (3.2) und nach Passieren des zweiten Kühlmittelkanals (3.2) in den dritten Kühlmittelkanal (3.3) je um zweimal 90° sowie nach Passieren des dritten Kühlmittelkanals (3.3) um einmal 90° in einen zentralen radialen Austritt (5) umgelenkt wird.

5. Heisswindschieber nach einem der vorhergehenden Ansprüche, **dadurch gekennzeichnet, dass** das Kühlmittel nach dem Durchströmen des Gehäusesitzringes und/oder des Plattensitzringes (2) in einen vorzugsweise spiralförmig umlaufenden Kühlmittelkanal (8) des Plattenkörpers (1) führbar ist.

6. Heisswindschieber nach einem der Ansprüche 1 bis 5, **dadurch gekennzeichnet, dass** Eintritt (4) und Austritt (5) des Kühlmittels des Gehäuses und/oder der Absperrplatte dicht beieinander an dem Gehäuse- bzw. Absperrplattenumfang liegen und z. B. nach oben in Verschieberichtung der Absperrplatte weisen.

7. Heisswindschieber nach einem der Ansprüche 1 bis 6, **dadurch gekennzeichnet, dass** der erste und der zweite Kühlmittelkanal (3.1, 3.2) der Absperrplatte auf seiner Innenseite je von einer auch den Plattenkörper (1) begrenzenden Plattenwand (9, 10) und daran anschließend je von einem nach innen offenen U-Profil (11, 12) begrenzt sind.

8. Heisswindschieber nach Anspruch 7, **dadurch gekennzeichnet, dass** der dritte Kühlmittelkanal (3.3) beidseits von den Plattenwänden (9, 10) begrenzt ist.

## Claims

1. A hot-blast slide valve with a casing, a shutoff plate, a cover for the seat of the shutoff plate in the open position, and a drive system for the shutoff plate, in which the casing has a coolable seating ring and the shutoff plate has a central plate body (1) and a coolable seating ring (2) surrounding said plate body (1) and comprising a plurality of coolant channels (3) connected in series, and in which the coolant can be conveyed around from an inlet (4) in the seating ring of the casing and/or the seating ring (2) of the plate initially in a first coolant channel (3.1) adjoining a first side wall (6) of the seating ring through almost 360° in the seating ring (2) and then in a second coolant channel (3.2) adjoining an opposed second side wall (7) of the seating ring through almost 360° in the seating ring (2), **characterized in that** the coolant can then be conveyed around the seating ring (2) in a third coolant channel (3.3) disposed between the first and second coolant channels (3.1, 3.2) through almost 360° in the seating ring (2) to an outlet (5) and thence out of the seating ring (2).

2. A hot-blast slide valve according to Claim 1, **characterized in that** the direction of flow of the coolant in the third coolant channel (3.3) is the opposite way to that in the first and/or second coolant channel (3.1, 3.2).

3. A hot-blast slide valve according to Claim 1 or 2, **characterized in that** the direction of flow of the coolant in the first coolant channel (3.1) is the same as or opposite that in the second coolant channel (3.2).

4. A hot-blast slide valve according to one of the preceding claims, **characterized in that,** after entry through a central radial inlet (4) into the seating ring of the casing and/or the seating ring (2) of the plate, the coolant is deflected into the first coolant channel (3.1), then after passing through the first coolant channel (3.1) is deflected twice through 90° into the second coolant channel (3.2) and after passing through the second coolant channel (3.2) is again deflected twice through 90° into the third coolant channel (3.3) and after passing through the third coolant channel (3.3) is deflected once through 90° into a central radial outlet (5).

5. A hot-blast slide valve according to one of the preceding claims, **characterized in that,** after flowing through the seating ring of the casing and/or the seating ring (2) of the plate, the coolant can be conveyed into a coolant channel (8) of the plate body (1), said coolant channel (8) preferably extending in the form of a spiral.

6. A hot-blast slide valve according to one of Claims 1 to 5, **characterized in that** the inlet (4) and outlet (5) of the coolant of the casing and/or of the shutoff plate lie close together on the circumference of the casing or shutoff plate and, for example, point upwards in sliding direction of the shutoff plate.

7. A hot-blast slide valve according to one of Claims 1 to 6, **characterized in that** the first and the second coolant channels (3.1, 3.2) of the shutoff plate are each delimited on their respective inner sides by a plate wall (9, 10) - which also delimits the plate body (1) - and, following on from this in each case, by a U-profile (11, 12) which is open towards the inside.

8. A hot-blast slide valve according to Claim 7, **characterized in that** the third coolant channel (3.3) is delimited on both sides by the plate walls (9, 10).

## Revendications

1. Vanne à vent chaud avec un boîtier, une plaque d'obturation, un capot pour recevoir la plaque d'obturation en position ouverte et un système d'entraînement pour la plaque d'obturation, le boîtier présentant un anneau de siège de boîtier pouvant être refroidi et la plaque d'obturation présentant un corps de plaque central (1) et un anneau de siège de plaque (2) l'encerclant et pouvant être refroidi avec plusieurs canaux pour fluide réfrigérant (3) branchés les uns derrières les autres, le fluide réfrigérant pouvant être transporté depuis une entrée (4) dans l'anneau de siège de boîtier et / ou dans l'anneau de siège de plaque (2) en passant tout d'abord dans un premier canal pour fluide réfrigérant (3.1) adjacent à une première paroi latérale (6) de l'anneau de siège en parcourant quasiment 360° dans l'anneau de siège, puis dans un deuxième canal pour fluide réfrigérant (3.2) adjacent à une deuxième paroi latérale (7) de l'anneau de siège en parcourant quasiment 360° dans l'anneau de siège, **caractérisée en ce que** le fluide réfrigérant peut être ensuite transporté dans un troisième canal pour fluide réfrigérant (3.3) situé entre le premier et le deuxième canal pour fluide réfrigérant (3.1, 3.2) en parcourant quasiment 360° dans l'anneau de siège (2) jusqu'à atteindre une sortie (5) et être ensuite sortie de l'anneau de siège (2).

2. Vanne à vent chaud selon la revendication 1, **caractérisée en ce que** la direction de circulation du fluide réfrigérant dans le troisième canal de fluide réfrigérant (3.3) est opposée à celle dans le premier et / ou le deuxième canal de fluide réfrigérant (3.1, 3.2).

3. Vanne à vent chaud selon la revendication 1 ou 2, **caractérisée en ce que** la direction de circulation du fluide réfrigérant dans le premier canal pour fluide réfrigérant (3.1) est identique ou opposée à celle dans le deuxième canal pour fluide réfrigérant (3.2).

4. Vanne à vent chaud selon l'une des revendications précédentes, **caractérisée en ce que** le fluide réfrigérant est dévié après une entrée centrale radiale (4) dans l'anneau de siège de boîtier et / ou dans l'anneau de siège de plaque (2) dans le premier canal pour fluide réfrigérant (3.1), puis après avoir passé le premier canal pour fluide réfrigérant (3.1) il est dévié dans le deuxième canal pour fluide réfrigérant (3.2) et après avoir passé le deuxième canal pour fluide réfrigérant (3.2) il est dévié dans le troisième canal pour fluide réfrigérant (3.3), et ce en étant dévié deux fois de 90° à chaque fois, et il est dévié une fois de 90° dans une sortie centrale radiale (5) après avoir passé le troisième canal pour fluide réfrigérant (3.3).

5. Vanne à vent chaud selon l'une des revendications précédentes, **caractérisée en ce que** le fluide réfrigérant peut être guidé dans un canal de fluide réfrigérant (8) du corps de plaque (1), ledit canal ayant de préférence une forme de spirale, après avoir traversé l'anneau de siège de boîtier et / ou l'anneau de siège de plaque (2).

6. Vanne à vent chaud selon l'une des revendications 1 à 5, **caractérisée en ce que** l'entrée (4) et la sortie (5) pour le fluide réfrigérant du boîtier et / ou de la plaque d'obturation sont situées proche l'une de l'autre sur le pourtour du boîtier respectivement de la plaque d'obturation, et sont dirigées par exemple vers le haut dans la direction de déplacement de la plaque d'obturation.

7. Vanne à vent chaud selon l'une des revendications 1 à 6, **caractérisée en ce que** le premier et le deuxième canal pour fluide réfrigérant (3.1, 3.2) de la plaque d'obturation sont délimités chacun sur leur face intérieure par une paroi de plaque (9, 10) délimitant également le corps de plaque (1) et sont ensuite délimités chacun par un profilé en U (11, 12) ouvert vers l'intérieur.

8. Vanne à vent chaud selon la revendication 7, **caractérisé en ce que** le troisième canal pour fluide réfrigérant (3.3) est délimité des deux côtés par les parois de plaque (9, 10).
